Europäisches Patentamt

European Patent Office

Office européen des brevets

(11) Publication number: **0 247 700 B1**

# EUROPEAN PATENT SPECIFICATION

(45) Date of publication of patent specification: **22.05.91**   (51) Int. Cl.⁵: **A01D  85/00**, A01D 90/08

(21) Application number: **87201012.9**

(22) Date of filing: **29.05.87**

(54) **A device for loading and unloading bales of straw and similar material.**

(30) Priority: **30.05.86 NL 8601407**

(43) Date of publication of application:
**02.12.87 Bulletin  87/49**

(45) Publication of the grant of the patent:
**22.05.91 Bulletin  91/21**

(84) Designated Contracting States:
**BE DE FR GB NL**

(56) References cited:
**BE-A- 770 016**
**DE-A- 2 319 136**
**FR-A- 2 341 259**
**FR-A- 2 380 719**

(73) Proprietor: **Hack, Bernardus Antonius Maria**
**Engelseweg 1c**
**NL-4756 SE Kruisland(NL)**

Proprietor: **Hack, Wilhelmus Cornelis**
**Elizabeth**
**Engelseweg 1c**
**NL-4756 SE Kruisland(NL)**

(72) Inventor: **Hack, Bernardus Antonius Maria**
**Engelseweg 1C**
**NL-4756 SE Kruisland(NL)**
Inventor: **Hack, Wilhelmus Cornelis Elizabeth**
**Engelseweg 1C**
**NL-4756 SE Kruisland(NL)**

(74) Representative: **Boelsma, Gerben Harm, Ir. et**
**al**
**Octrooibureau Polak & Charlouis Laan**
**Copes van Cattenburch 80**
**NL-2585 GD Den Haag(NL)**

Rank Xerox (UK) Business Services

## Description

The invention relates to a device for loading and unloading bales of straw or similar material, comprising carriage adapted to be coupled to a pulling vehicle and having a loading space which is open at its top and rear side, upright partition means which extend parallel to the travelling direction of the carriage and divide the loading space into a number of juxtaposed bale-wide compartments, a substantially bale-wide guide means extending from a location adjacent the coupling site upwardly towards a location on top level where it is connected to the forward end of a distribution device mounted on top of the carriage and extending longitudinally ( = traveling direction) along the open top of the loading space and adapted to receive the bales supplied by the guide means and distribute the bales over said compartments the bottoms of which being interconnected so as to let them down simultaneously into the unloading position.

Such a carriage is known from FR-A-2.380.719. In this well-known carriage the distribution device is taking a fixed, central position on top of the loading space and is designed to selectively direct - in one direction to the other - a row of bales laterally and downwardly into the loading space. As a consequence of this the number of (longitudinal extending) compartments is limited i.e. two at the maximum. Moreover the construction of the distribution device is such that it occupies a relatively large part of the total height of the carriage.

Only relatively small stacks of bales may thus be formed and deposited by this well-known carriage.

The invention aims at providing an improved device for loading and unloading bales of straw or similar material. According to the invention this aim is achieved with a device of the type referred to hereinabove, which has the additional features mentioned in the characteristic clause of claim 1.

Due to the distribution device being constructed as a transversely displaceable case, it may serve more than two, e.g. four (longitudinally extending) compartments of the loading space.

It is to be noted that FR-A-2.341.259 dicloses a carriage for loading and unloading bales of straw and similar material, which is capable of collecting relatively large numbers of bales. The loading space comprises a relatively large number of compartments, while a movable case is used to distribute the bales among the various compartments. In this well-known carriage, however, the partitions, the compartments and the distribution case extend in a direction transverse to the traveling direction of the carriage, while the distribution case is movable across the open top of the loading space in the traveling direction of the carriage. A disadvantage of this construction is, that the distribution case has to be supplied from a device located on the outer side of a side wall of the carriage. This means a substantial enlargement of the total width of the carriage beyond the effective loading width and also requires special provisions (in this well-known example a conveying means in the bottom of the distribution case) to make sure that a bale upon arrival at the receiving end of the distribution case will be laterally tilted into the distribution case and then be moved further in the transverse direction through the case. Moreover said special conveying means in the bottom of the distribution case requires a special way of transfering the bales from the case in an underlying compartment.

Another serious disadvantage is, that due to the orientation of the partitions and the compartments it is not possible to unload a completely loaded carriage in one single course of action and deposit the collected bales as a self-sustaining stack. Instead the unloading has to take place transversal row by transversal row and compartment by compartment. Moreover in this well-known construction the loading space has to be moved step by step lengthwise relative to the chassis of the carriage to bring the bottoms of the compartments successively in a condition which permit them to take their unloading positions.

In a preferred embodiment of the invention the bottom elements of the distribution case may also be constituted by flaps which are pivoted about the lower edges of the side walls of the distribution case and which extend - in the unloading position - downwardly in the planes of said side walls, said flaps being provided with counter weights which tend to keep the flaps into their operative (horizontal) supporting positions, the weight of a complete longitudinal hale row being enough to have the flaps turn, against the action of the counter weights - into their unloading positions.

A further aspect of the invention is formed by the special performance of the device for supplying the bales to be loaded, which device may be capable of bridging the distance from a substantially fixed location (behind the bale press) to the distribution case along a trajectory which varies both in direction and length.

According to this further aspect this device is mainly characterized by two side walls and a bottom, each comprising at least two telescopic rods, which form the connection between an up-right U-frame constituting the entrance of the device and the vertical and lower horizontal edges delimiting the inlet opening of the distribution case, the rod ends being in each connecting point capable of pivoting about both a horizontal and a vertical axis.

It is to be noted that a device of this type is known per se with a bale collecting carriage disclosed in BE-A-700.016. In this well-known vehicle, however, the rod ends at the delivery end of the supplying device are connected at a fixed location to the front wall of the carriage.

A supply device constructed in this way may adapt itself smoothly to any variation occurring in use with respect to the elevation of the device, the length of the device and the (lateral) deviation of the device.

The invention will be hereinafter further described by way of example with reference to the accompanying drawings.

Fig. 1 shows a perspective view of the device according to the invention;

fig. 2 is a side view of the device of fig. 1;

fig. 3 is a rear end view of the device of fig. 1 and

fig. 4 is a perspective view of the rear portion of the distribution case.

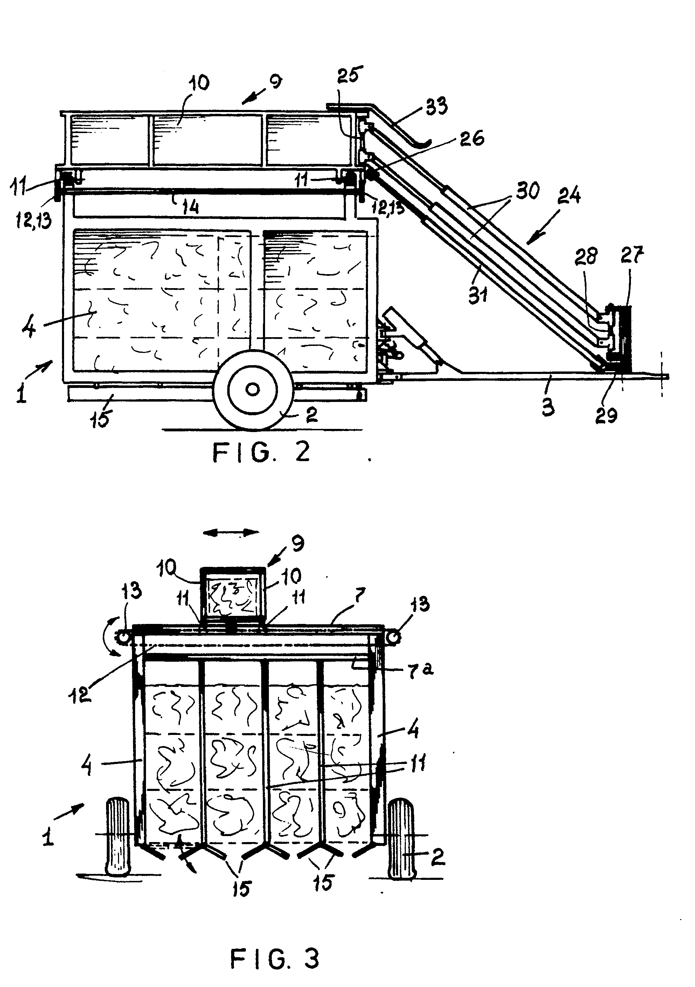

The device shown in the drawing comprises a carriage 1 supported on wheels 2, which may be connected - by means of a coupling bar 3 - to the rear side of a bale press (not shown). The carriage has two side walls 4, the frames of which are, on the front or coupling bar side, interconnected by means of a lower cross beam 5 and an upper cross beam 6 respectively but are, on the rear side, interconnected only at the top by means of a cross beam 7. The loading space delimited by the two side walls 4 is divided, by means of three vertical longitudinal partitions 8, into four compartments the width of which corresponds with that of a bale. On the front side the longitudinal partitions 8 are supported by a lower cross beam 5a and a cross beam 6a the latter being provided at a small distance below the upper cross beam 6. On the rear side of the carriage (Fig. 3) the partitions 8 are supported merely at the top by means of a cross beam 7a.

The upper cross beams 6 and 7 also serve as guiding means for a distribution case 9 adapted to ride in transverse direction across the open upper side of the loading space. The distribution case mainly consist of two side walls 10, which are interconnected on the inlet end (i.e. the front side of the carriage) by a lower cross member and on the rear end (i.e. the rear side of the carriage) by a number of cross members. The width of the distribution case 9 is slightly larger than that of a straw bale. The support on and guidance by the cross beams 6 and 7 is effected with the intermediary of rollers 11, while two chains, guided about sprockets 13 journaled on the ends of the beams 6 and 7, are provided to move the case in transverse direction. On one side of the carriage the sprockets 13 located on that side are connected by a shaft 14, which is coupled to a power source (not shown) by means of which the distribution case may be moved step by step from a position above one compartment to a position above an adjacent compartment. The power source is reversible, so that upon arrival of the distribution case above one of the two side compartments, the direction of the next transverse displacement can be reversed.

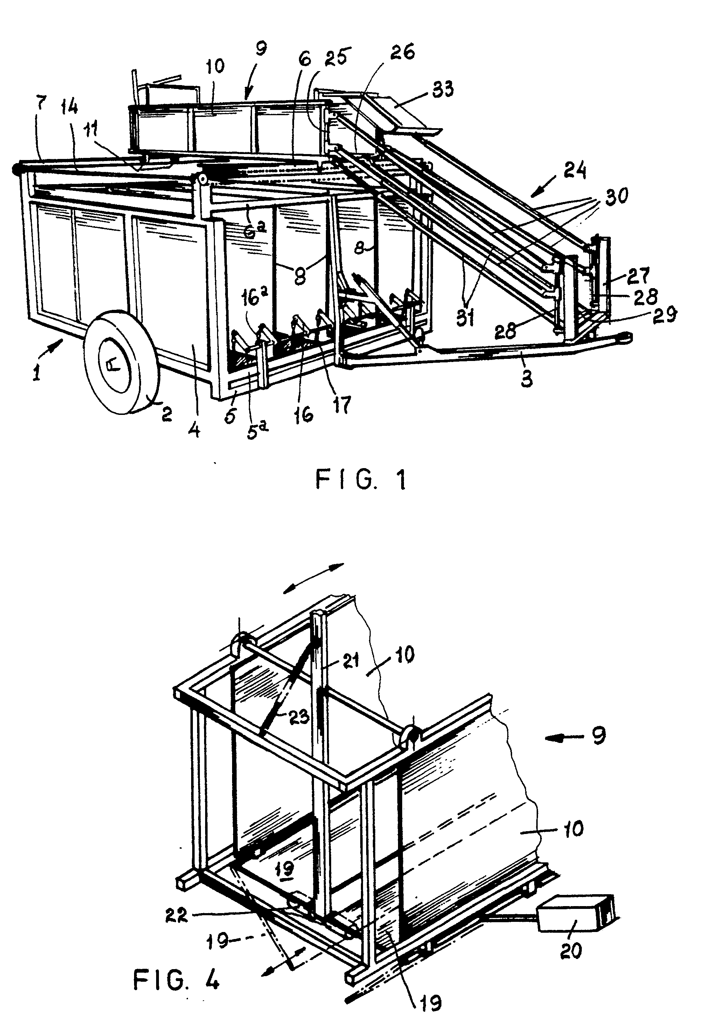

The bottoms of the four compartments are each formed by a pair of flaps 15, which are adapted to pivot about the lower edges of the side walls and partitions respectively. In the normal or supporting positions the flaps are oriented horizontally and they are held in this position by a corresponding number of levers 16 and suspending chains 16a, which levers are mounted on a shaft 17 extending in transverse direction and journaled in bearings 18 on the front side of the carriage. The bottom flaps may be let down by turning shaft 17, when seen in fig. 1, anti-clockwise. In the let-down positions (vide fig. 2) the bottom flaps 15 extend downwardly and lie in the plane of the respective side wall 4 or partition 8.

The distribution case 9 has similar bottom flaps 19, which may pivot about the lower edges of the side walls 10 (vide fig. 4). The flaps are provided with contra-weights 20, which tend to keep the flaps in their operative horizontal positions. 21 designates a locking lever, which is pivotally suspended by a transverse shaft adjacent the rear end of the distribution case and carries at its lower end two locking rollers 22, extending to either side of the lever. In the locking position of the lever 21, which is controled by a spring 23, the rollers 22 engage the flaps from underneath so as to lock the latter in their operative supporting positions.

The passageway which connects the outlet of a bale press (not shown) to the inlet end of the distribution case 9 is designated at 24. Vertical shafts 25 and a horizontal shaft 26 are mounted along the vertical edges and the horizontal edge respectively which delimit the inlet opening of the distribution case 9 (vide fig. 1 and 2). 27 designates an upright U-shaped frame, adapted to be connected to the outlet of the bale press and supported adjacent the forward end of the coupling bar 3. The U-frame 27 constitutes the entrance of the passageway 24. On the side facing towards the distribution case 9 vertical shafts 28 and a horizontal shaft 29 are mounted along the legs and the web respectively of the U-frame. The passageway further comprises two side walls and a bottom. The side walls are each formed by two parallel, telescopic extendable rods 30, which connect a vertical shaft 25 on the inlet end of the distribution case 9 to a vertical shaft 28 of the U-frame 29. The connection between the telescopic rod ends and the shafts 28 and 29 respectively is such, that the rod end may not only pivot about those shafts but are also permitted to pivot about a horizontal axis.

The bottom of the passageway is constituted by two parallel telescopic extendable rods 31, forming a connection between the two horizontal lshafts 26 and 29. The respective ends of the rods 31 may not only pivot about the shafts 26 and 29, but may also swing about a vertical axis.

The above described construction of the passageway 24 enables the delivery end of the latter to follow the transverse displacements of the distribution case 9 across the carriage, while the inlet end of the passageway is kept in its position relative to the carriage.

The construction described hereinabove also permits a certain angular movement of the U-frame 27 relative to the coupling bar 3, which is of importance when traveling through curves.

In operation, straw bales are supplied from the right in fig. 1 and are urged upwardly along the passageway 24. A baffle plate 33 is provided above the bend between the passageway 24 and the distribution case 9, urging a passing bale to conform to the bend in the transitional area. By this is is prevented that a bale upon arrival at the bend would continue moving in the direction of the passageway and thereby would loose its driving contact with the foregoing bale in the distribution case.

As soon as the distribution case has got filled (in this example this will be the case when there are two bales in it) the downstream bale will push the locking lever 21 against the action of spring 23 into its unlocking position, which allows the flaps 19 to open under the influence of the weight of the bales and against the action of the counter-weights so that the bales will drop into the underlying compartment. As soon as the bottom flaps 19 are released from the weight of the bales, the counterweights cause them to return to their operative positions. During the latter returning movement cam surfaces (not shown) on the flaps will be active so as to first push the locking lever slightly backwards into the unlocking direction and then allow the locking lever to return with its rollers snapping under the closed bottom flaps.

**Claims**

1. A device for loading and unloading bales of straw or similar material, comprising a carriage (1) adapted to be coupled to a pulling vehicle and having a loading space which is open at its top and rear side, upright partition means (8) which extend parallel to the travelling direction of the carriage (1) and divide the loading space into a number of juxtaposed bale-wide compartments, a substantially bale-wide guide means (24) extending from a location adjacent the coupling site upwardly towards a location on top level where it is connected to the forward end of a distribution device (9) mounted on top of the carriage (1) and extending longitudinally ( = travelling direction) along the open top of the loading space and adapted to receive the bales supplied by the guide means (24) and distribute the bales over said compartments the bottoms (5) of which being interconnected so as to let them down simultaneously into the unloading position, characterized in that said distribution device (8) comprises a bale wide case (8) which is mounted for transverse displacement across said loading space, the bottom of said case comprising elements (19), which are movable from an operative supporting position into a position allowing the bales to drop out of the case into the compartment underneath, the guide means (24) being swingably mounted at its connection to the distribution case (8) so that its upper end is permitted to take part in the transversal displacement of the distribution case (8).

2. A device according to claim 1, characterized in that the bottom elements (19) of the distribution case (8) are constituted by flaps which are pivoted about the lower edges of the side walls (10) of the distribution case (8) and which extend - in the unloading position-downwardly in the planes of said side walls (10), said flaps (19) being provided with counter weights (20) which tend to keep the flaps (19) into their operative (horizontal) supporting positions, the weight of a complete longitudinal bale row being enough to have the flaps (19) turn, against the action of the counter weights (20) - into their unloading positions.

3. A device according to claim 2, characterized by a spring-urged locking member (21) at the rear end of the distribution case (8), which is adapted to engage the flaps (19) and lock the latter in their supporting position and adapted to be contacted by a bale, when the case is completely filled, so as the release said member (21) against spring action from its locking engagement with the flaps (19) and allow the latter to move into the let-down position, means (22, 23) being provided which urge the locking member (21), after the case (8) has been unloaded, to allow the flaps (19) to return to their supporting positions and then permit the member (21) to return to its locking position.

4. A device according to claims 1-3, characterized in that the bale guiding and supplying device (24) has two side walls and a bottom, each comprising at least two telescopic rods (31; 30), which form the connection between an up-right U-frame (27) constituting the entrance of the device (24) and the vertical and lower horizontal edges (25; 26) delimitating the inlet opening of the distribution case (8), the rod ends being in each connecting point capable of pivoting about both a horizontal and a vertical axis.

## Revendications

1. Dispositif pour charger et décharger des balles de paille ou matériaux similaires, comprenant un support (1) apte à être couplé à un véhicule de traction et ayant un espace de chargement qui est ouvert sur son côté arrière et supérieur, des moyens de partage verticaux (8) qui s'étendent parallèlement à la direction de transport du support (1) et divisent l'espace de chargement en un certain nombre de compartiments de largeur d'une balle juxtaposés, un moyen de guidage de largeur sensiblement d'une balle (24) s'étendant à partir d'une localisation au voisinage du côté de l'accouplement vers le haut en direction d'une localisation sur le niveau le plus haut, où il est relié à l'extrémité avant d'un dispositif de distribution (9) monté sur le haut du support (1), s'étendant longitudinalement (= direction de transport) le long de la partie supérieure ouverte de l'espace de chargement et apte à recevoir les balles alimentées par le moyen de guidage (24) et à distribuer les balles au-dessus desdits compartiments, dont les fonds (5) sont interconnectés de façon à s'abaisser simultanément dans la position de déchargement, caractérisé en ce que ledit dispositif de distribution (8) comprend une caisse de largeur d'une balle (8) qui est montée pour un déplacement transversal à travers ledit espace de chargement, le fond de ladite caisse comprenant des éléments (19), qui sont déplaçables à partir d'une position de support en fonctionnement dans une position permettant aux balles d'être tirées de la caisse dans le compartiment inférieur, le moyen de guidage (24) étant monté oscillant au niveau de sa liaison avec la caisse de distribution (8) de sorte que son extrémité supérieure peut prendre part au déplacement transversal de la caisse de distribution (8).

2. Un dispositif selon la revendication 1, caractérisé en ce que les éléments formant fond (19) de la caisse de distribution (8) sont constitués de clapets qui pivotent autour des extrémités inférieures des parois latérales (10) de la caisse de distribution (8) et qui s'étendent - dans la position de déchargement - vers le bas, dans les plans desdites parois latérales (10), lesdits clapets (19) étant prévus avec des contrepoids (20) qui tendent à maintenir les clapets (19) dans leurs positions de support de fonctionnement (horizontaux), le poids d'une rangée de balles achevée longitudinale étant suffisant pour que les clapets (19) tournent, contre l'action des contrepoids (20) - dans leurs positions de déchargement.

3. Dispositif selon la revendication 2, caractérisé par un membre de verrouillage (21) comprimé par ressort à l'extrémité arrière de la caisse de distribution (8), qui est apte à engager les clapets (19) et à verrouiller ces derniers dans leur position de support et apte à être contacté par une balle, lorsque la caisse est complètement remplie, de façon à ce que ledit membre (21) soit libéré contre l'action du ressort à partir de son engagement de verrouillage avec les clapets (19) et à permettre à ces derniers de se déplacer dans leur position abaissée, un moyen (22, 23) étant prévu qui pousse le moyen de verrouillage (21), après que la caisse (8) ait été déchargée, pour permettre au clapet (19) de retourner vers leurs positions de support et ensuite pour permettre au membre (21) de retourner vers sa position de verrouillage.

4. Dispositif selon les revendications 1 à 3, caractérisé en ce que le dispositif de guidage de balles et le dispositif d'alimentation (24) comportent deux parois latérales et un fond, chacun comprenant au moins deux tiges télescopiques (31; 30), qui forment la liaison entre une structure en U verticale (27) constituant l'entrée du dispositif (24) et les bords verticaux et inférieurs horizontaux (25; 26) délimitant l'ouverture d'admission de la caisse de distribution (8), les extrémités de tige étant dans chaque point de liaison capables de pivoter autour à la fois d'un axe horizontal et d'un axe vertical.

## Ansprüche

1. Vorrichtung zum Laden und Entladen von Strohballen oder derartigem Material, bestehend aus einem zum Kuppeln mit einem Zugfahrzeug eingerichteten Wagen (1) mit einem durch eine Anzahl von parallel zur Fahrrichtung des Wagens (1) verlaufenden senkrechten Wänden (8) in nebeneinander angeordneten, ballenbreiten Abteilungen verteilten, oben und hinten offen Laderaum, wobei sich eine etwa ballenbreite Führungsvorrichtung (24) erstreckt von einer Stelle in der Nähe des Kupplungspunkt in Aufwärtsrichtung zu einer oberen Stelle, wo die Vorrichtung mit dem vorderen Ende einer Verteilvorrichtung (9) verbunden ist, die auf dem wagen (1) montiert ist und sie in der Längsrichtung ( = Fahrrichtung) längs der offenen oberen Seite des Laderaums erstreckt und eingerichtet ist zum Aufnehmen der von der Führungsvorrichtung (24) herangeführten Ballen und zum Verteilen der Ballen zwischen den genannten Abteilungen, deren Boden (5) miteinander verbunden sind und zugleich in die Entladeposition gesenkt werden können, dadurch gekennzeichnet, daß die Verteilvorrichtung (8) einen ballen-breiten Kasten (8) aufweist, der in Querrichtung über den Laderaum bewegbar montiert ist und dessen Boden aus Elementen (19) besteht, die aus einer wirksamen Stützlage in eine Lage bewegbar sind, in der die Ballen aus dem Kasten in die darunter liegende Abteilung fallen könsen, wobei die Führungsvorrichtung (24) um ihre Verbindungspunkt mit dem Verteilkasten (8) schwenkbar montiert ist, sodaß das obere Ende derselben der Querbewegung des Verteilkastens (8) folgen kann.

2. Vorrichtung nach Anspruch 1, dadurch gekennzeichnet, daß die Bodenelemente (19) des Verteilkastens (8) durch klappen gebildet werden, die um die unteren Ränder der Seitenwände (10) des Verteilkastens (8) drehen können und die sie in der Entladeposition nach unten - in den Ebenen der genannten Seitenwände (10) - erstrecken, welche Klappen (19) mit Gegengewichten (20) versehen sind, die bestrebt sind die Klappen (19) in deer wirksamen (wagerechten) Stützlage zu halten, wobei das Gewicht einer kompletten Ballen-Längsreihe ausreicht um die Klappen (19) gegen die Wirkung der Gegengewichte (20) in ihre Entladeposition drehen zu lassen.

3. Vorrichtung nach Anspruch 2, gekennzeichnet durch ein Feder-belastes Riegelelement (21) am hinteren Ende des Verteilkastens (8), das dazu eingerichtet ist mit den Klappen (19) in Eingriff zu treten und diese in ihrer Stützlage zu sichern und um bei vollständig gefühltem Kasten durch eine Balle weggeschoben zu werden damit das Element (21) gegen die Wirkung der Feder aus dem verriegelnden Eingriff mit den Klappen (19) freikommt, wodurch die letzten in ihre abgesenkte Lage treten können, wobie Mittel (22,23) vorgesehen sind, die das Riegel-element (21), nachdem der Kasten (8) entladen worden ist, in der Lage stellen die Klappen (19) in ihre Stützlage zurückkehren zu lassen und darauf das Element (21) in seine Verrieglungslage zurückkehren lassen.

4. Vorrichtung nach Ansprüchen 1-3, dadurch gekennzeichnet, daß die Ballen- Führungs- und Zuführvorrichtung (24) zwei Seitenwände und einen Boden hat, die je aus mindestens zwei Teleskopstangen (31; 30) bestehen, die die Verbindung bilden zwischen einen senkrechten Urahmen (27), der den Eintritt der Vorrichtung (24) bildet, und den vertikalen und unteren, wagerechten Begrenzungsrändern (25, 26) der Eintrittsöffnung des Verteilkastens (8), wobie die Stangenenden in jedem Verbindungspunkt sowohl um eine wagerechte, wie auch um eine vertikale Achse drehen können.

FIG. 1

FIG. 4

FIG. 2

FIG. 3